# EUROPÄISCHE PATENTANMELDUNG

(11) **EP 1 344 918 A2**
(43) Veröffentlichungstag der Anmeldung: **17.09.2003**
(21) Anmeldenummer: 03005927.3
(22) Anmeldetag: 17.03.2003
(51) Int. Cl.: F02D 19/08

(54) **Brennstoffversorgungseinrichtung für eine Brennkraftmaschine sowie Verfahren zur Versorgung einer Brennkraftmaschine mit unterschiedlichen Brennstoffen**

(30) Priorität: 15.03.2002 DE 10211633
(71) Anmelder: Munz Hans Volker, 70374 Stuttgart (DE)
(72) Erfinder: Munz, Hans-Volker, 70374 Stuttgart (DE); Schmid, Markus, 71384 Weinstadt (DE); Platz, Rainer, 71394 Kernen (DE)

(57) **Zusammenfassung**

Es wird eine Brennstoffversorgungseinrichtung für eine Brennkraftmaschine beschrieben, welche es erlaubt, eine Brennkraftmaschine mit gasförmigem, flüssiggasförmigem und flüssigen Brennstoffen zu betreiben, wobei die gasförmigen und die flüssiggasförmigen Brennstoffe auch als Brennstoffgemisch der Brennkraftmaschine zugeführt werden können, sowie ein Verfahren zur Versorgung einer Brennkraftmaschine mit unterschiedlichen Brennstoffen.

## Beschreibung

### Technisches Gebiet:

Die Erfindung betrifft eine Brennstoffversorgungseinrichtung für eine Brennkraftmaschine sowie ein Verfahren zur Versorgung einer Brennkraftmaschine mit unterschiedlichen Brennstoffen.

### Stand der Technik:

Die Erfindung geht aus von einer Brennstoffversorgungseinrichtung für eine Brennkraftmaschine nach der Gattung des Hauptanspruchs sowie einem Verfahren zur Versorgung einer Brennkraftmaschine mit unterschiedlichen Brennstoffen nach dem Oberbegriff des Anspruchs 22.
Es ist bekannt, Brennstoffversorgungseinrichtung für Brennkraftmaschinen derart auszuführen, dass die Brennkraftmaschine mit immer dem selben Brennstoff versorgt wird. Solche Brennstoffversorgungseinrichtungen weisen den Nachteil auf, dass der Betreib der Brennkraftmaschine immer abhängig ist von der Verfügbarkeit dieses einen Brennstoffes. Durch die regionalen und internationalen Preisunterschiede der Brennstoffe sind insbesondere bei mobil eingesetzten Brennkraftmaschinen die Betriebskosten starken Schwankungen in Abhängigkeit von den lokalen Brennstoffkosten unterlegen.
Eine andere bekannte Art von Brennstoffversorgungseinrichtungen mit einem Benzintank und einem Erdgastank wird überwiegend in Kraftfahrzeugen verwendet. Diese Art von Brennstoffversorgungseinrichtungen weisen jedoch den Nachteil auf, dass die Brennkraftmaschine beim Betreib mit Erdgas deutlich weniger Leistung abgibt, als im Benzinbetrieb. Zudem ist die Reichweite des Fahrzeugs mit dem erheblich günstigeren Erdgas wegen der geringen Energiedichte im Erdgastank stark verringert.
Eine zusätzliche bekannte, auch in Kraftfahrzeugen eingesetzte Art von Brennstoffversorgungseinrichtungen weist einen Benzintank und einen Flüssiggastank auf. Nachteilig ist hierbei, dass der Druck im Flüssiggastank in Abhängigkeit vom Füllstand und insbesondere in Abhängigkeit von der Umgebungstemperatur variiert, so dass ein zuverlässiger Betreib der Brennkraftmaschine des Kraftfahrzeugs nicht unter allen klimatischen Verhältnissen gewährleistet ist.
Aus der DE 40 15 411 C2 ist ein Gasmotor der nach dem Otto-Prinzip arbeitet bekannt, der mit Klär- oder Deponiegas oder mit Flüssiggas betrieben wird, wobei nur das Flüssiggas in einem Tank gelagert wird, um bei Ausfall der Klär- oder Deponiegasversorgung, welches direkt aus einem Klärwerk oder einer Deponie gewonnen wird, dem Gasmotor zugeführt zu werden, so dass ein unterbrechungsfreier Betreib des Gasmotors möglich ist. Hierbei wird der jeweilige Brennstoff vor Eintritt in die Brennkammer mit dem Luftsauerstoff gemischt. Nachteilig bei der in DE 40 15 411 C2 beschriebenen Brennstoffversorgungseinrichtung ist, dass ein dauerhafter Betreib der stationären Brennkraftmaschine mit einem Gemisch aus einem gasförmigen und aus einem flüssiggasförmigen Brennstoff nicht möglich ist und aufgrund der Vermischung des Brennstoffes mit Luft vor Eintritt in den Brennraum nur Otto-Gasmotoren verwendet werden können.

### Technische Aufgabe der Erfindung:

Der Erfindung liegt daher die Aufgabe zugrunde, eine Brennstoffversorgungseinrichtung zu entwickeln, mit der beliebige, stationär und mobil einsetzbare Brennkraftmaschinen mit gasförmigen und flüssiggasförmigen Brennstoffen betrieben werden können, wobei ein zuverlässiger Betrieb bei bedarfsgerechter Leistungsabgabe mit den genannten Brennstoffen gewährleistet, und eine Nachrüstung von bestehenden, bisher mit flüssigen Brennstoffen betriebenen Brennkraftmaschinen mit dieser Brennstoffversorgungseinrichtung möglich sein soll, sowie ein Verfahren zu entwickeln, welches den zuverlässigen Betrieb einer derart umgerüsteten Brennkraftmaschine sicherstellt.

### Offenbarung der Erfindung und deren Vorteile:

Die Brennstoffversorgungseinrichtung für eine Brennkraftmaschine der genannten Gattung ist erfindungsgemäß gekennzeichnet durch mindestens einen Gastank für gasförmige Brennstoffe, wie beispielsweise Wasserstoff, Erdgas, Deponiegas, Klärgas, oder dergleichen, wobei der Gastank als Druckbehälter ausgeführt ist, da der gasförmige Brennstoff wegen seiner geringen Energiedichte unter sehr hohem Druck gelagert werden muss, mindestens einen unter einem im Vergleich zum Gastank nur unter einem geringen Überdruck gegenüber der Umgebung stehenden Flüssiggastank für flüssiggasförmige Brennstoffe wie beispielsweise Propan, Butan oder einem Gemisch aus Propan und Butan, einen mit einem Gasmischungssteuergerät verbundenen Mischer, der auf seiner Eingangsseite durch je eine Entnahmeleitung mit dem Flüssiggastank und dem Gastank verbunden ist und auf seiner Ausgangsseite mit einer mit mindestens einem Brennraum der Brennkraftmaschine in Verbindung stehenden Gasleitung verbunden ist, so dass dem Brennraum ein vom Gasmischungssteuergerät automatisch oder manuell vorgebbares und im Mischer gebildetes Brennstoffgemisch aus den im Flüssiggastank und im Gastank gelagerten Brennstoffen zuführbar ist, wobei der Mischer an seiner mit dem unter hohem Druck stehenden Gastank über eine der beiden Entnahmeleitungen verbundenen Eingangsseite einen höheren Druckabfall aufweist, als auf seiner mit dem Flüssiggastank verbundenen Eingangsseite und wobei der Mischer in seinen beiden Endstellungen, in denen jeweils genau ein Brennstoff der Brennkraftmaschine zugeführt wird, den jeweils anderen Tank absperrt, so dass der Mischer durch das Gasmischungssteuergerät derart steuerbar ist, dass, beispielsweise durch eine vom Benutzer am Gasmischungssteuergerät gewählte Voreinstellung, auch nur Brennstoff aus dem Gastank oder nur Brennstoff aus dem Flüssiggastank der Brennkraftmaschine zuführbar ist, und die Entnahmeleitung zu dem Tank des jeweils nicht der Brennkraftmaschine zugeführten Brennstoffs durch den Mischer abgesperrt wird, einem zwischen Mischer und dem Brennraum der Brennkraftmaschine angeordneten, steuerbaren Durchflussmengenregler, einer Sonde, mit der die Zusammensetzung der im Brennraum gebildeten Reaktionsprodukte bestimmbar ist, einem Leistungssensor, wie beispielsweise Drosselklappenpotentiometer, Saugrohrdrucksensor, Gaspedal, Temperaturfühler, Drehzahlregler, Messwiderstand, oder dergleichen, und einem mit der Sonde, dem Leistungssensor und dem Durchflussmengenregler verbundenen Durchflussmengensteuergerät, so dass in Abhängigkeit von der Leistungsanforderung an die Brennkraftmaschine durch die Bestimmung der Zusammensetzung der Reaktionsprodukte im Brennraum die der Brennkraftmaschine zuzuführende Brennstoffmenge regelbar ist, wobei der Durchflussmengenregler durch das Durchflussmengensteuergerät, derart steuerbar ist, dass die der Brennkraftmaschine zuzuführende Brennstoffmenge, beispielsweise durch eine vom Benutzer vorgegebene Einstellung wie Ein/Aus, zwischen Null und einem von dem Brennstoffbedarf der Brennkraftmaschine und dem Leitungsquerschnitt zwischen den Tanks und dem Brennraum abhängigen Maximalwert regelbar ist. Die Zufuhr des Brennstoffgemischs an die Brennkraftmaschine erfolgt in Abhängigkeit von deren Arbeitsprinzip entweder in den Zuführkanal zum Brennraum, durch den auch der Oxidator, in den meisten Anwendungsfällen Luftsauerstoff, zugeführt wird oder direkt in den Brennraum, dem der Oxidator getrennt vom Brennstoff zugeführt wird oder in einen Brennraum, in dem eine kalte Verbrennung in Form einer Reformation des Brennstoffes als Vorstufe zur lonisation der Moleküle und Atome in Verbindung mit einem Stofftransport durch eine Membran statt findet, wobei der Druck in der Gasleitung größer ist, als der Druck im Brennraum, wodurch beispielsweise bei einer Turbine ein Verdampfen des flüssiggasförmigen Brennstoffes erst im Brennraum erfolgt. Im einen Gasmischungsraum aufweisenden Mischer, in den die Entnahmeleitungen des Gastanks und des Flüssiggastanks münden und von dem die Gasleitung hin zur Brennkraftmaschine abzweigt, ist vorzugsweise ein Verstellelement angeordnet, mittels dem durch vom Gasmischungssteuergerät vorgebbares Verschieben oder Verkippen ein kontinuierliches Öffnen der einen, bei gleichzeitigem Schließen der anderen, in den Gasmischungsraum mündenden Entnahmeleitungen erfolgt, wodurch der Druckabfall der Brennstoffströme aus den über die Entnahmeleitungen an den Mischer angeschlossenen Tanks in Abhängigkeit von der Stellung des Verstellelements derart steuerbar ist, dass bei hohem Druckabfall an der Einmündung der einen Entnahmeleitung ein geringer Druckabfall an der Einmündung der anderen Entnahmeleitung erfolgt.

Eine vorteilhafte Ausgestaltung der Erfindung sieht vor, dass das Gasmischungssteuergerät mit dem Durchflussmengensteuergerät verbunden ist, so dass die Zusammensetzung des im Mischer gebildeten Brennstoffgemischs in Abhängigkeit von der Leistungsanforderung an die Brennkraftmaschine vom Gasmischungssteuergerät vorgegeben werden kann.

Eine vorteilhafte Ausgestaltung der erfindungsgemäßen Brennstoffversorgungseinrichtung für eine Brennkraftmaschine ist gekennzeichnet durch jeweils ein mit dem Gasmischungssteuergerät verbundenes Absperrventil in den Entnahmeleitungen zwischen dem Mischer und dem Flüssiggastank und dem Gastank, so dass beim Betrieb der Brennkraftmaschine mit einem Brennstoff aus nur einem der Tanks für flüssiggasförmigen oder gasförmigen Brennstoff der jeweils andere Tank abgesperrt werden kann.

Eine andere vorteilhafte Ausgestaltung der erfindungsgemäßen Brennstoffversorgungseinrichtung für eine Brennkraftmaschine ist gekennzeichnet durch einen in der Entnahmeleitung zwischen dem Mischer und dem Gastank angeordneten Druckminderer, so dass der im Gastank herrschende hohe Druck vor Erreichen des Mischers reduziert wird, wobei der Druckminderer mit dem Gasmischungssteuergerät verbindbar ist, um den Druckabfall am Druckminderer durch das Gasmischungssteuergerät bei Bedarf steuern zu können.

Eine vorteilhafte Ausgestaltung der erfindungsgemäßen Brennstoffversorgungseinrichtung für eine Brennkraftmaschine ist gekennzeichnet durch einen in der Entnahmeleitung zwischen dem Mischer und dem Flüssiggastank angeordneten Druckminderer, so dass der Druck des flüssiggasförmigen Brennstoffs vor dem Mischer so weit reduziert werden kann, dass der im Flüssiggastank flüssiggasförmig gelagerte Brennstoff im Druckminderer in die gasförmige Phase übergeht und gasförmig in den Mischer strömt, wobei der Druckminderer mit dem Gasmischungssteuergerät verbindbar ist, um den Druckabfall im Druckminderer beispielsweise in Abhängigkeit vom Druck im Flüssiggastank zu steuern.

Eine vorteilhafte Ausgestaltung der erfindungsgemäßen Brennstoffversorgungseinrichtung für eine Brennkraftmaschine sieht vor, dass in mindestens einer Entnahmeleitung anstelle des Absperrventils ein Druckminderer angeordnet ist, wobei der Druckminderer mit dem Gasmischungssteuergerät verbunden ist und ein vom Gasmischungssteuergerät vorgebbarer, gegen unendlich gehender Druckabfall am Druckminderer erzeugbar ist, so dass der Druckminderer ein Absperrventil in der jeweiligen Entnahmeleitung ersetzt.

Eine vorteilhafte Ausgestaltung der erfindungsgemäßen Brennstoffversorgungseinrichtung für eine Brennkraftmaschine sieht vor, dass ein mit dem Durchflussmengensteuergerät verbundenes Ventil zwischen Durchflussmengenregler und Brennraum angeordnet ist, so dass die Dauer der Brennstoffeinblasung in den Brennraum steuerbar ist.

Eine andere vorteilhafte Ausgestaltung der erfindungsgemäßen Brennstoffversorgungseinrichtung für eine Brennkraftmaschine sieht vor, dass anstelle des Durchflussmengenreglers ein mit dem Durchflussmengensteuergerät verbundenes Ventil zwischen Mischer und Brennraum angeordnet ist.

Eine zusätzliche vorteilhafte Ausgestaltung der erfindungsgemäßen Brennstoffversorgungseinrichtung für eine Brennkraftmaschine sieht vor, dass ein Arbeitstaktsensor mit dem Durchflussmengensteuergerät verbunden ist, so dass der Zeitpunkt des Öffnens des zwischen Mischer und Brennraum angeordneten Ventils in Abhängigkeit vom Arbeitstakt der Brennkraftmaschine steuerbar ist.

Eine andere vorteilhafte Ausgestaltung der erfindungsgemäßen Brennstoffversorgungseinrichtung für eine Brennkraftmaschine ist gekennzeichnet durch jeweils ein Rückschlagventil in den Entnahmeleitungen des Flüssiggastanks und des Gastanks zur Verhinderung des Rückströmens der Brennstoffe in die am Mischer angeschlossenen Tanks.

Eine vorteilhafte Ausgestaltung der erfindungsgemäßen Brennstoffversorgungseinrichtung für eine Brennkraftmaschine ist gekennzeichnet durch jeweils einen Drucksensor in den Entnahmeleitungen zu dem Gastank und dem Flüssiggastank, wobei der Drucksensor mit dem Gasmischungssteuergerät verbunden ist, so dass in Abhängigkeit von dem Druck in der Entnahmeleitung oder im mit der Entnahmeleitung verbundenen Tank, welcher ein Maß für den Füllstand des jeweiligen Tanks ist, das Brennstoffgemisch in Abhängigkeit des Füllstandes des Gastanks und des Flüssiggastanks unter Berücksichtigung einer gegebenenfalls manuell vorgenommenen Brennstoffwahl zusammengesetzt wird.

Eine vorteilhafte Ausgestaltung der erfindungsgemäßen Brennstoffversorgungseinrichtung für eine Brennkraftmaschine sieht vor, dass in der Entnahmeleitung zwischen Flüssiggastank und Mischer eine Pumpe angeordnet ist, wobei der Förderdruck der Pumpe einstellbar ist, so dass der vor dem Mischer anstehende Druck in der Entnahmeleitung unabhängig vom Druck im Flüssiggastank regelbar ist, und die Schwankungen des Flüssiggasdrucks in Abhängigkeit von der Umgebungstemperatur verhindert werden können, wodurch eine besonders zuverlässige Versorgung einer Brennkraftmaschine mit einem Brennstoff aus dem Flüssiggastank möglich ist, insbesondere bei Brennkraftmaschinen mit einer direkten Brennstoffeinblasung in den Brennraum.

Eine zusätzliche vorteilhafte Ausgestaltung der erfindungsgemäßen Brennstoffversorgungseinrichtung für eine Brennkraftmaschine ist gekennzeichnet durch an den Druckminderern und/oder dem Mischer und/oder den Ventilen angeordnete Heizeinrichtungen, zur Verminderung der Gefahr des Einfrierens der Bauteile, an denen ein Druckabfall und somit eine Temperaturabnahme des durchströmenden Brennstoffs stattfindet.

Eine besonders vorteilhafte Ausgestaltung der erfindungsgemäßen Brennstoffversorgungseinrichtung für eine Brennkraftmaschine ist gekennzeichnet durch eine am Flüssiggastank angeordnete Heizeinrichtung, um mittels Wärmezufuhr einen Druckabfall im Flüssiggastank insbesondere bei niedrigen Umgebungstemperaturen zu verhindern, wobei die Heizeinrichtung sowohl elektrisch als auch in Form eines Wärmetauschers ausgeführt sein kann.

Eine vorteilhafte Ausgestaltung der erfindungsgemäßen Brennstoffversorgungseinrichtung für eine Brennkraftmaschine sieht vor, dass die Brennkraftmaschine ein Otto-Motor ist, wobei die Gasleitung zentral in das Saugrohr endet und die Sonde zur Bestimmung der Reaktionsprodukte im Brennraum eine Abgas-Lambdasonde ist, so dass die der Brennkraftmaschine zuzuführende Brennstoffmenge derart regelbar ist, dass eine vollständige Verbrennung, in der KFZ-Technik durch λ=1 beschrieben, in Abhängigkeit von beispielsweise der Drosselklappenstellung und dem Druck im Saugrohr erfolgt, wobei die Regelung der Lambda-Sonde mit einem Kühlwassertemperatur-Sensor gekoppelt sein kann.

Eine vorteilhafte Ausgestaltung der erfindungsgemäßen Brennstoffversorgungseinrichtung für eine Brennkraftmaschine sieht vor, dass sich die Gasleitung aufteilt und an mindestens zwei Stellen, jedoch höchstens an so vielen Stellen, wie der Otto-Motor Brennräume aufweist, nahe bei den Brennräumen in das Saugrohr mündet und dass an jeder Einmündungsstelle ein mit dem Durchflussmengensteuergerät verbundenes Ventil angeordnet ist, so dass die Brennstoffzufuhr in Abhängigkeit des Brennstoffbedarfs der von der Einmündungsstelle aus mit Brennstoff versorgten Brennräume erfolgt, wobei vorzugsweise direkt vor jedem Brennraum eine Einblasdüse angeordnet ist, aber auch beispielsweise bei einem Motor mit Zylindern in V-Anordnung eine getrennte Brennstoffeinblasung je Zylinderbank erfolgt.

Eine andere vorteilhafte Ausgestaltung der erfindungsgemäßen Brennstoffversorgungseinrichtung für eine Brennkraftmaschine sieht vor, dass die Brennkraftmaschine eine Brennstoffzelle ist.

Eine besonders vorteilhafte Ausgestaltung der erfindungsgemäßen Brennstoffversorgungseinrichtung für eine Brennkraftmaschine ist gekennzeichnet durch einen zusätzlichen Tank für flüssige Brennstoffe wie beispielsweise Benzin, Diesel, Kerosin, Alkohol, Heizöl, eine Umschalteinrichtung zur automatischen oder manuellen Umschaltung zwischen den Brennstoffen, wobei die Umschalteinrichtung mit dem Durchflussmengensteuergerät und dem Einspritzsteuergerät für den flüssigen Brennstoff verbunden ist, so dass dem Brennraum entweder flüssiger Brennstoff oder das vom Mischer gebildete Brennstoffgemisch zugeführt wird, und eine Schnittstelle am Durchflussmengensteuergerät zum Einspritzsteuergerät, um über die Schnittstelle Betriebsdaten und Steuerbefehle, beispielsweise für das Öffnen oder Schließen einzelner Ventile oder Schaltungen zur Unterbrechung oder Aufnahme der Brennstoffzufuhr aus einem bestimmten Tank zu übertragen, so dass alle Brennstoffe, die zur Energieerzeugung in der Brennkraftmaschine geeignet sind, dieser zugeführt werden können. Durch die Verwendung eines Tanks für flüssigen Brennstoff, eines Flüssiggastanks und eines Gastanks können beliebige stationär oder mobil, beispielsweise in Kraftfahrzeugen eingesetzte Brennkraftmaschinen mit der erfindungsgemäßen Brennstoffversorgungseinrichtung nachgerüstet werden.

Eine zusätzliche vorteilhafte Ausgestaltung der erfindungsgemäßen Brennstoffversorgungseinrichtung für eine Brennkraftmaschine sieht vor, dass anstelle des Mischers ein T-Stück zwischen den Entnahmeleitungen und der Gasleitung angeordnet ist und dass in den Entnahmeleitungen mit dem Gasmischungssteuergerät verbundene Ventile angeordnet sind so dass durch Öffnen eines Ventils in einer der Entnahmeleitungen der Brennkraftmaschine entweder Brennstoff aus dem Tank für gasförmige Brennstoffe oder Brennstoff aus dem Tank für flüssiggasförmige Brennstoffe zuführbar ist.

Eine andere, zusätzliche vorteilhafte Ausgestaltung der erfindungsgemäßen Brennstoffversorgungseinrichtung für eine Brennkraftmaschine sieht vor, dass die Brennkraftmaschine ein Verbrennungsmotor, beispielsweise nach dem Otto- oder Diesel-Prinzip ist, wobei die Gaseinblasung durch die selbe Einspritzdüse erfolgt, durch die auch die Einspritzung des flüssigen Brennstoffes wie beispielsweise Benzin, Diesel, Alkohol, Kerosin, Heizöl, oder dergleichen erfolgt, wobei in der Gasleitung und in der Einspritzleitung vor deren Zusammenführung jeweils ein Rückschlagventil anordbar ist.

Eine besonders vorteilhafte Ausgestaltung der erfindungsgemäßen Brennstoffversorgungseinrichtung für eine Brennkraftmaschine sieht vor, dass an mindestens einen Tank dauerhaft eine Brennstoffquelle (Pipelines, Gasleitungen) anschließbar ist, wobei ein Rückschlagventil zwischen Tank und Brennstoffquelle angeordnet ist, so dass ein Abströmen des Brennstoffs nur in Richtung Brennkraftmaschine erfolgt, und der Tank sowohl als Puffer für Druckschwankungen der Brennstoffquelle und zur Überbrückung bei Ausfall der Brennstoffquelle dient.

Ein erfindungsgemäßes Verfahren zur Versorgung einer Brennkraftmaschine mit unterschiedlichen Brennstoffen weist gegenüber dem Stand der Technik den Vorteil auf, dass das Durchflussmengensteuergerät während des Betriebs der Brennkraftmaschine mit einem Brennstoff aus dem Gastank und/oder dem Flüssiggastank die Zufuhr von flüssigem Brennstoff unterbricht und dem Einspritzsteuergerät eine Brennstoffeinspritzung simuliert.

Eine vorteilhafte Ausgestaltung des erfindungsgemäßen Verfahren zur Versorgung einer Brennkraftmaschine mit unterschiedlichen Brennstoffen sieht vor, dass die Zufuhr eines bestimmten Brennstoffs oder Brennstoffgemischs in Abhängigkeit von den Parametern Füllstand der Tanks, Betriebstemperatur, Umgebungstemperatur, Leistungsanforderung erfolgt, wobei der Füllstand im Gastank und im Flüssiggastank beispielsweise durch Drucksensoren ermittelt wird und das Gasmischungssteuergerät die Brennstoffzufuhr durch die Gasleitung unterbricht, wenn Brennstoff aus dem Tank für flüssige Brennstoffe dem Brennraum zugeführt werden soll

Kurzbeschreibung der Zeichnung, in der zeigt:

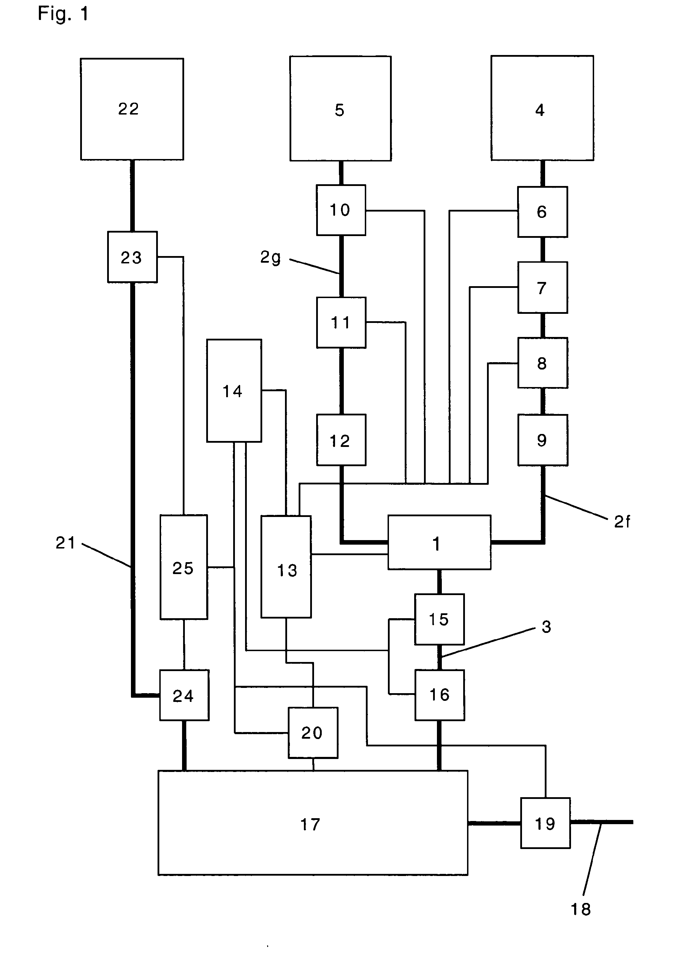

- Figur 1: Ein Schaltbild einer erfindungsgemäßen Brennstoffversorgungseinrichtung für eine Brennkraftmaschine.

### Wege zur Ausführung der Erfindung:

Bei der in Figur 1 dargestellte Brennstoffversorgungseinrichtung für eine Brennkraftmaschine ist ein Mischer 1 an seiner Eingangsseite über zwei Entnahmeleitungen 2f und 2g mit jeweils einem Flüssiggastank 4 und einem Gastank 5 verbunden. Auf der Ausgangsseite ist der Mischer 1 mit einer Gasleitung 3 verbunden, über die ein im Mischer 1 beliebig aus den in dem Flüssiggastank 4 und dem Gastank 5 gelagerten Brennstoffen zusammensetzbares Brennstoffgemisch mindestens einem Brennraum in einer nicht näher spezifizierten Brennkraftmaschine 17 zugeführt wird. Die Brennkraftmaschine kann eine Turbine, ein Verbrennungsmotor nach dem Otto-, Diesel- oder Stirling-Prinzip, oder ein Brenner sein, eine Brennstoffzelle mit einem Gasreformator ist ebenso denkbar. Zwischen dem Mischer 1 und dem Flüssiggastank 4 ist ausgehend vom Flüssiggastank 4 in der Entnahmeleitung 2f zunächst ein Drucksensor 6 angeordnet, dessen an ein Gasmischungssteuergerät 13 weitergeleitetes Ausgangssignal ein Maß für den Füllstand des Flüssiggastanks 4 ist, danach ist eine Pumpe 7 angeordnet, welche Brennstoff aus dem Flüssiggastank 4 saugt und den Druck in der Entnahmeleitung 2f hin zum Mischer 1 konstant hält, so dass Schwankungen des Drucks im Flüssiggastank 4 aufgrund von veränderlichen Umgebungstemperaturen keinen Einfluss auf die Brennstoffzufuhr zur Brennkraftmaschine 17 haben. Um den Druck in der Entnahmeleitung 2f besser regeln zu können, ist nach der Pumpe 7 ein Druckminderer 8 angeordnet, der wie die Pumpe 7 vom Gasmischungssteuergerät 13 gesteuert werden kann. Um bei einem Ausfall der Pumpe 7 oder leerem Flüssiggastank 4 ein Rückströmen von Brennstoff aus dem Mischer 1 in den Flüssiggastank 4 zu verhindern, ist zwischen Mischer 1 und Druckminderer 8 ein Rückschlagventil 9 angeordnet. Zwischen dem Mischer 1 und dem Gastank 5 ist ausgehend vom Gastank 5 in der Entnahmeleitung 2g zunächst ein Drucksensor 10 angeordnet, dessen an das Gasmischungssteuergerät 13 weitergeleitetes Ausgangssignal ein Maß für den Füllstand des Gastanks 5 ist, danach ist ein mit dem Gasmischungssteuergerät 13 verbundener Druckminderer 11 angeordnet, so dass der Hochdruck im Gastank 5 abgesenkt wird, und dem Druckniveau in der Entnahmeleitung 2f vor dem Mischer 1 angepasst werden kann, so dass im Mischer 1 ein Brennstoffgemisch der in den Tanks 4 und 5 gelagerten Brennstoffen gebildet werden kann. Um bei leerem Gastank 5 ein Rückströmen von Brennstoff aus dem Mischer 1 in den Gastank 5 zu verhindern, ist zwischen Mischer 1 und Druckminderer 11 ein Rückschlagventil 12 angeordnet.
In der Gasleitung 3 ist zwischen Mischer 1 und der Brennkraftmaschine 17 ein Durchflussmengenregler 15 angeordnet, der mit einem Durchflussmengensteuergerät 14 verbunden ist, so dass die der Brennkraftmaschine zuzuführende Brennstoffmenge vom Durchflussmengensteuergerät 14 vorgegeben werden kann. Um bei einer periodisch arbeitenden Brennkraftmaschine den Einblaszeitpunkt des Brennstoffgemischs aus den Tanks 4 und 5 dem Arbeitstakt der Brennkraftmaschine anzupassen, ist ein vom Durchflussmengensteuergerät 14 steuerbares Ventil 16, welches beispielsweise in eine Einblasdüse integriert sein kann in der Gasleitung 3 nach dem Durchflussmengenregler 15 angeordnet. Ein Tank 22 für flüssigen Brennstoff, wie Benzin oder Diesel, ist mit einer Einspritzleitung 21, in welcher eine Flüssigbrennstoffpumpe 23 und ein steuerbares Einspritzventil 24, welches eine steuerbare Einspritzdüse sein kann, angeordnet ist, mit mindestens einem Brennraum der Brennkraftmaschine verbunden. Sowohl die Flüssigbrennstoffpumpe 23, als auch das Einspritzventil 24 sind mit einem Einspritzsteuergerät 25 verbunden, welches beim Betreib der Brennkraftmaschine 17 mit flüssigem Brennstoff aus dem Tank 22 sämtliche Funktionen der Brennkraftmaschine 17 überwacht und steuert. Hierfür ist das Einspritzsteuergerät 25 mit einem Leistungssensor 20, der ein Drosselklappenpotentiometer, Saugrohrdrucksensor, Gaspedal, Temperaturfühler, oder Messwiderstand sein kann und mit dem die Leistungsanforderung an die Brennkraftmaschine 17 bestimmt werden kann, und mit einer in der Abgasleitung 18 angeordneten Sonde 19 verbunden, über welche die Reaktionsprodukte im Brennraum und damit die Verbrennungsqualität und das Brennstoff-Oxidator-Verhältnis bestimmbar ist. Die Sonde 19 und der Leistungssensor 20 sind maßgeblich für die dem Brennraum zuzuführende Brennstoffmenge. Beim Betrieb der Brennkraftmaschine 17 mit einem Brennstoffgemisch aus dem Flüssiggastank 4 und dem Gastank 5 steuert das ebenfalls mit der Sonde 19 und dem Leistungssensor 20 verbundene Durchflussmengensteuergerät 14 die Funktion der Brennkraftmaschine 17 und simuliert dem Einspritzsteuergerät 25 den Betrieb mit flüssigem Brennstoff, wobei das Einspritzventil 24 geschlossen bleibt und die Flüssigbrennstoffpumpe 23 abgeschaltet ist. Das mit dem Leistungssensor 20 verbundene Gasmischungssteuergerät 13 regelt in Abhängigkeit von der Leistungsanforderung an die Brennkraftmaschine 17 und vom Brennstoffvorrat in den Tanks 4 und 5 und unter Berücksichtigung einer manuellen Vorgabe das im Mischer 1 gebildete Brennstoffgemisch. Während des Betriebs mit flüssigem Brennstoff aus dem Tank 22 gibt das Durchflussmengensteuergerät 14 ein Signal an das Gasmischungssteuergerät 13 und das Ventil 16, wodurch die Brennstoffzufuhr aus der Gasleitung 3 unterbrochen wird und die Pumpe 7 abgestellt wird.

### Gewerbliche Anwendbarkeit:

Die Erfindung ist insbesondere bei der Brennstoffversorgung von Brennkraftmaschinen in Kraftfahrzeugen und der Brennstoffversorgung von Brennkraftmaschinen zur dezentralen Energieerzeugung gewerblich anwendbar.

### Bezugszahlenliste

- 1: Mischer
- 2f, 2g: Entnahmeleitungen
- 3: Gasleitung
- 4: Flüssiggastank
- 5: Gastank
- 6: Drucksensor
- 7: Pumpe
- 8: Druckminderer
- 9: Rückschlagventil
- 10: Drucksensor
- 11: Druckminderer
- 12: Rückschlagventil
- 13: Gasmischungssteuergerät
- 14: Durchflussmengensteuergerät
- 15: Durchflussmengenregler
- 16: Ventil
- 17: Brennkraftmaschine
- 18: Abgasleitung
- 19: Sonde
- 20: Leistungssensor
- 21: Einspritzleitung
- 22: Tank
- 23: Flüssigbrennstoffpumpe
- 24: Einspritzventil
- 25: Einspritzsteuergerät

## Patentansprüche

1. Brennstoffversorgungseinrichtung für eine Brennkraftmaschine, **gekennzeichnet durch**, mindestens einen Gastank (5) für gasförmige Brennstoffe, mindestens einen Flüssiggastank (4) für flüssiggasförmige Brennstoffe, einen mit einem Gasmischungssteuergerät (13) verbundenen Mischer (1), der auf seiner Eingangsseite **durch** je eine Entnahmeleitung (2f, 2g) mit dem Flüssiggastank (4) und dem Gastank (5) verbunden ist und auf seiner Ausgangsseite mit einer mit mindestens einem Brennraum der Brennkraftmaschine (17) in Verbindung stehenden Gasleitung (3) verbunden ist, so dass dem Brennraum ein vom Gasmischungssteuergerät(13) vorgebbares und im Mischer (1) gebildetes Brennstoffgemisch aus den im Flüssiggastank (4) und im Gastank (5) gelagerten Brennstoffen zuführbar ist, wobei der Mischer (1) in seinen beiden Endstellungen, in denen jeweils genau ein Brennstoff der Brennkraftmaschine (17) zugeführt wird, den jeweils anderen Tank (4, 5) absperrt, einem zwischen Mischer (1) und dem Brennraum der Brennkraftmaschine (17) angeordneten, steuerbaren Durchflussmengenregler (15), einer Sonde (19), mit der die Zusammensetzung der im Brennraum gebildeten Reaktionsprodukte bestimmbar ist, einem Leistungssensor (20), und einem mit der Sonde (19), dem Leistungssensor (20) und dem Durchflussmengenregler (15) verbundenen Durchflussmengensteuergerät (14), so dass in Abhängigkeit von der Leistungsanforderung an die Brennkraftmaschine (17) **durch** die Bestimmung der Zusammensetzung der Reaktionsprodukte im Brennraum die der Brennkraftmaschine zuzuführende Brennstoffmenge regelbar ist.

2. Brennstoffversorgungseinrichtung für eine Brennkraftmaschine nach Anspruch 1, **dadurch gekennzeichnet, dass** das Gasmischungssteuergerät (13) mit dem Durchflussmengensteuergerät (14) verbunden ist, so dass die Zusammensetzung des im Mischer (1) gebildeten Brennstoffgemischs in Abhängigkeit von der Leistungsanforderung an die Brennkraftmaschine vom Gasmischungssteuergerät vorgebbar ist.

3. Brennstoffversorgungseinrichtung für eine Brennkraftmaschine nach einem der vorhergehenden Ansprüche, **gekennzeichnet durch** jeweils ein in den Entnahmeleitungen (2f, 2g) zwischen dem Mischer (1) und dem Flüssiggastank (4) und dem Gastank (5) angeordnetes und mit dem Gasmischungssteuergerät (13) verbundenes und von diesem steuerbares Absperrventil.

4. Brennstoffversorgungseinrichtung für eine Brennkraftmaschine nach einem der vorhergehenden Ansprüche, **gekennzeichnet durch** einen zwischen dem Mischer (1) und dem Gastank (5) in der Entnahmeleitung (2g) angeordneten Druckminderer (11), wobei der Druckminderer (11) mit dem Gasmischungssteuergerät (13) verbindbar ist.

5. Brennstoffversorgungseinrichtung für eine Brennkraftmaschine nach einem der vorhergehenden Ansprüche, **gekennzeichnet durch** einen zwischen dem Mischer (1) und dem Flüssiggastank (4) in der Entnahmeleitung (2f) angeordneten Druckminderer, wobei der Druckminderer mit dem Gasmischungssteuergerät (13) verbindbar ist.

6. Brennstoffversorgungseinrichtung für eine Brennkraftmaschine nach Anspruch 3, **dadurch gekennzeichnet, dass** in mindestens einer Entnahmeleitung (2f, 2g) anstelle des Absperrventils ein mit dem Gasmischungssteuergerät (13) verbundener Druckminderer (11) angeordnet ist, wobei am Druckminderer (11) ein vom Gasmischungssteuergerät (13) vorgebbarer, gegen unendlich gehender Druckabfall erzeugbar ist.

7. Brennstoffversorgungseinrichtung für eine Brennkraftmaschine nach einem der vorhergehenden Ansprüche, **dadurch gekennzeichnet, dass** ein mit dem Durchflussmengensteuergerät (14) verbundenes Ventil (16) zwischen Durchflussmengenregler (15) und dem Brennraum der Brennkraftmaschine (17) angeordnet ist, so dass die Dauer der Brennstoffeinblasung in den Brennraum regelbar ist.

8. Brennstoffversorgungseinrichtung für eine Brennkraftmaschine nach einem der Ansprüche 1 bis 6, **dadurch gekennzeichnet, dass** anstelle des Durchflussmengenreglers (15) ein mit dem Durchflussmengensteuergerät (14) verbundenes und von diesem steuerbares Ventil (16) zwischen Mischer (1) und Brennraum in der Gasleitung (3) angeordnet ist.

9. Brennstoffversorgungseinrichtung für eine Brennkraftmaschine nach Anspruch 7 oder 8, **dadurch gekennzeichnet, dass** ein Arbeitstaktsensor mit dem Durchflussmengensteuergerät (14) verbunden ist, so dass der Zeitpunkt des Öffnens des zwischen Mischer (1) und Brennraum angeordneten Ventils (16) in Abhängigkeit vom Arbeitstakt der Brennkraftmaschine (17) steuerbar ist.

10. Brennstoffversorgungseinrichtung für eine Brennkraftmaschine nach einem der vorhergehenden Ansprüche, **gekennzeichnet durch** jeweils ein Rückschlagventil (9, 12) in den mit dem Flüssiggastank (4) und dem Gastank (5) verbundenen Entnahmeleitungen (2f, 2g).

11. Brennstoffversorgungseinrichtung für eine Brennkraftmaschine nach einem der vorhergehenden Ansprüche, **gekennzeichnet durch** jeweils einen Drucksensor (6, 10) in den Entnahmeleitungen (2f, 2g) zu dem Gastank (5) und dem Flüssiggastank (4), wobei der Drucksensor (6, 10) mit dem Gasmischungssteuergerät verbunden ist, so dass das der Brennkraftmaschine zuzuführende Brennstoffgemisch in Abhängigkeit des Füllstandes des Gastanks (5) und des Flüssiggastanks (4) zusammensetzbar ist.

12. Brennstoffversorgungseinrichtung für eine Brennkraftmaschine nach einem der vorhergehenden Ansprüche, **dadurch gekennzeichnet, dass** in der Entnahmeleitung (2f) zwischen Flüssiggastank (4) und Mischer (1) eine Pumpe (7) angeordnet ist, wobei der Förderdruck der Pumpe (7) einstellbar ist, so dass der vor dem Mischer (1) anstehende Druck in der Entnahmeleitung (2f) unabhängig vom Druck im Flüssiggastank (4) regelbar ist .

13. Brennstoffversorgungseinrichtung für eine Brennkraftmaschine nach einem der vorhergehenden Ansprüche, **gekennzeichnet durch** an den Druckminderern (8, 11, 15) und/oder dem Mischer (1) und/oder den Ventilen (16, Absperrventile) angeordnete Heizeinrichtungen.

14. Brennstoffversorgungseinrichtung für eine Brennkraftmaschine nach einem der vorhergehenden Ansprüche, **gekennzeichnet durch** eine am Flüssiggastank (4) angeordnete Heizeinrichtung.

15. Brennstoffversorgungseinrichtung für eine Brennkraftmaschine nach einem der vorhergehenden Ansprüche, **dadurch gekennzeichnet, dass** die Brennkraftmaschine (17) ein Otto-Motor ist, wobei die Gasleitung (3) zentral in das Saugrohr endet, der Leistungssensor (20) ein Drosselklappenpotentiometer und ein Saugrohrdrucksensor ist und die Sonde (19) zur Bestimmung der Reaktionsprodukte im Brennraum eine Abgas-Lambdasonde ist, so dass die Brennstoffmenge derart regelbar ist, dass λ=1.

16. Brennstoffversorgungseinrichtung für eine Brennkraftmaschine nach Anspruch 15, **dadurch gekennzeichnet, dass** sich die Gasleitung (3) aufteilt und an mindestens zwei Stellen, jedoch höchstens an so vielen Stellen, wie der Otto-Motor Brennräume aufweist, nahe bei den Brennräumen in das Saugrohr mündet und dass an jeder Einmündungsstelle ein mit dem Durchflussmengensteuergerät (14) verbundenes Ventil (16) angeordnet ist.

17. Brennstoffversorgungseinrichtung für eine Brennkraftmaschine nach einem der Ansprüche 1 bis 14, **dadurch gekennzeichnet, dass** die Brennkraftmaschine (17) eine Brennstoffzelle ist.

18. Brennstoffversorgungseinrichtung für eine Brennkraftmaschine nach einem der Ansprüche 1 bis 16, **gekennzeichnet durch**, einen zusätzlichen Tank (22) für flüssige Brennstoffe (Benzin, Diesel, Kerosin, Alkohol), eine Umschalteinrichtung zur automatischen oder manuellen Umschaltung zwischen den Brennstoffen, wobei die Umschalteinrichtung mit dem Durchflussmengensteuergerät (14) und dem Einspritzsteuergerät (25) für den flüssigen Brennstoff verbunden ist, und eine Schnittstelle am Durchflussmengensteuergerät (14) zur Verbindung mit dem Einspritzsteuergerät (25).

19. Brennstoffversorgungseinrichtung für eine Brennkraftmaschine nach Anspruch 18, **dadurch gekennzeichnet, dass** anstelle des Mischers (1) ein T-Stück zwischen den Entnahmeleitungen (2f, 2g) und der Gasleitung (3) angeordnet ist und dass in den Entnahmeleitungen (2f, 2g) mit dem Gasmischungssteuergerät (13) verbundene Ventile angeordnet sind.

20. Brennstoffversorgungseinrichtung für eine Brennkraftmaschine nach Anspruch 18 oder 19, **dadurch gekennzeichnet, dass** die Brennkraftmaschine (17) ein Verbrennungsmotor (Otto, Diesel) ist, wobei die Gaseinblasung durch die selbe Einspritzdüse (24) erfolgt, durch die auch die Einspritzung des flüssigen Brennstoffes (Benzin, Diesel) erfolgt, wobei in der Gasleitung (3) und in der Einspritzleitung (21) vor deren Zusammenführung jeweils ein Rückschlagventil angeordnet ist.

21. Brennstoffversorgungseinrichtung für eine Brennkraftmaschine nach einem der vorhergehenden Ansprüche, **dadurch gekennzeichnet, dass** an mindestens einen Tank (4, 5, 22) dauerhaft eine Brennstoffquelle (Pipelines, Gasleitungen) anschließbar ist, wobei ein Rückschlagventil zwischen Tank (4, 5, 22) und Brennstoffquelle angeordnet ist, so dass ein Abströmen des Brennstoffs nur in Richtung Brennkraftmaschine (17) möglich ist, als Puffer für Druckschwankungen der Brennstoffquelle und zur Überbrückung bei Ausfall der Brennstoffquelle.

22. Verfahren zur Versorgung einer Brennkraftmaschine mit unterschiedlichen Brennstoffen nach einem der vorhergehenden Ansprüche, **dadurch gekennzeichnet, dass** die Zufuhr eines bestimmten Brennstoffs oder Brennstoffgemischs in Abhängigkeit von den Parametern Füllstand der Tanks, Betriebstemperatur, Umgebungstemperatur, Leistungsanforderung erfolgt.

23. Verfahren zur Versorgung einer Brennkraftmaschine mit unterschiedlichen Brennstoffen nach Anspruch 22, **dadurch gekennzeichnet, dass** das Durchflussmengensteuergerät (14) während des Betriebs der Brennkraftmaschine (17) mit einem Brennstoff aus dem Gastank (5) und/oder dem Flüssiggastank (4) die Zufuhr von flüssigem Brennstoff unterbricht und dem Einspritzsteuergerät (25) eine Einspritzung flüssigen Brennstoffs simuliert.
